Europäisches Patentamt

European Patent Office

Office européen des brevets

(11) Numéro de publication: **0 266 256**
**A1**

## (12) DEMANDE DE BREVET EUROPEEN

(21) Numéro de dépôt: **87402299.9**

(51) Int. Cl.⁴: **F 02 B 37/12**

(22) Date de dépôt: **14.10.87**

(30) Priorité: **29.10.86 FR 8615059**

(43) Date de publication de la demande:
**04.05.88  Bulletin  88/18**

(84) Etats contractants désignés: **DE GB IT SE**

(71) Demandeur: **AUTOMOBILES PEUGEOT**
**75, avenue de la Grande Armée**
**F-75116 Paris  (FR)**

**AUTOMOBILES CITROEN**
**62 Boulevard Victor-Hugo**
**F-92200 Neuilly-sur-Seine  (FR)**

(72) Inventeur: **Lauvin, Pierre**
**Résidence des 2 Noyers Bât. C - Rue des Coutures**
**F-78570 Andresy  (FR)**

(74) Mandataire: **Bouget, Lucien et al**
**Cabinet Lavoix 2, Place d'Estienne d'Orves**
**F-75441 Paris Cédex 09  (FR)**

(54) **Dispositif de commande de l'échappement des gaz à la sortie d'un moteur suralimenté par un turbo-compresseur.**

(57)  Le dispositif comporte une soupape de décharge (19, 21) commandant par son ouverture le passage des gaz d'échappement en dérivation par rapport à la turbine (6). La soupape de décharge (19, 21) est associée à un moyen de commande d'ouverture (22, 30) relié à un dispositif d'actionnement (40) propre à assurer l'ouverture de la soupape de décharge, lors du démarrage à froid du moteur, notamment par la différence de pression entre les gaz d'admission à la sortie du compresseur (5) et une source de gaz (2, 32) en dépression. Le moyen de commande (22) est constitué par une capsule à deux chambres (24, 25) associée à une électrovanne à trois voies (30). Le dispositif d'actionnement (40) reçoit un signal de commande d'une sonde de température (42) ou d'un temporisateur (43).

FIG.1

EP 0 266 256 A1

**Description**

Dispositif de commande de l'échappement des gaz à la sortie d'un moteur suralimenté par un turbo-compresseur

L'invention concerne un dispositif de commande de l'échappement des gaz à la sortie d'un moteur suralimenté par un turbo-compresseur.

Un turbo-compresseur de suralimentation d'un moteur est généralement constitué par un compresseur interposé sur le trajet des gaz frais avant leur entrée dans le collecteur d'admission du moteur et par une turbine accouplée au compresseur pour permettre son entraînement et interposée sur le trajet des gaz à la sortie du moteur, avant leur échappement à l'atmosphère. La suralimentation du moteur est régulée grâce à une soupape de décharge permettant par son ouverture le passage des gaz d'échappement, en dérivation par rapport à la turbine. L'ouverture de la soupape de décharge est assurée par la pression de suralimentation, c'est-à-dire par la pression des gaz frais à la sortie du compresseur, lorsque cette pression dépasse une certaine limite. On peut ainsi réguler la pression d'admission des gaz dans le moteur, de façon à limiter cette pression pour éviter de faire subir aux éléments internes du moteur des charges thermiques et mécaniques trop importantes.

Lorsqu'un tel moteur suralimenté par un turbo-compresseur est équipé d'un système de dépollution comportant un pot catalytique situé sur le circuit d'échappement en aval de la turbine, l'inertie thermique de l'échappement est augmentée par la présence de la turbine et de son carter sur le circuit d'échappement et la détente thermodynamique des gaz dans la turbine produit un refroidissement de ces gaz.

A la suite d'un démarrage à froid du moteur, les gaz d'échappement ne s'échauffent que lentement, à cause de la susdite inertie, en traversant la turbine; il en résulte une faible efficacité prolongée du cata lyseur car celui-ci n'est correctement efficace qu'à relativement haute température.

On connaît par les US-A-4.437.311, JP-A-59 37227 et FR-A-2.483.515, un dispositif de commande de l'échappement des gaz d'un moteur à turbo-compresseur qui comporte une soupape de décharge actionnée au moyen d'une capsule pneumatique à deux chambres, cette soupape permettant par son ouverture le passage des gaz d'échappement en dérivation par rapport à la turbine du turbo-compresseur.

L'une des chambres de la capsule pneumatique est en communication avec la tubulure d'admission du moteur en aval du compresseur et l'autre chambre est susceptible d'être mise en communication avec le collecteur d'admission en aval d'un papillon de réglage des gaz d'admission, par une conduite et par l'intermédiaire d'une vanne sensible à la température du moteur. Lorsque le moteur est relativement froid, la seconde chambre est mise à la pression d'admission, ce qui provoque l'ouverture de la soupape de décharge tant que le moteur est sous faible charge. Lorsque le moteur est sous charge forte ou moyenne, la pression accrue dans le collecteur transmise à la seconde chambre risque de provoquer la fermeture de la soupape de décharge, alors que le moteur est encore froid.

Le but de l'invention est donc de proposer un dispositif de commande de l'échappement des gaz d'un moteur suralimenté par un turbo-compresseur constitué de manière connue par un compresseur interposé sur le trajet des gaz frais avant leur entrée dans le collecteur d'admission du moteur et accouplé à une turbine interposée sur le trajet des gaz à la sortie du moteur avant leur échappement à l'atmosphère, le dispositif comportant une soupape de décharge qui per met par son ouverture le passage des gaz d'échappement en dérivation par rapport à la turbine et qui est relié à un organe mobile séparant, dans une capsule, deux chambres, une chambre dite haute pression en communication avec une tubulure d'admission en aval du compresseur et une chambre dite basse pression susceptible d'être en communication avec le collecteur d'admission du moteur, en aval d'un papillon de réglage des gaz d'admission, par une canalisation et par l'intermédiaire d'un sélecteur relié à un dispositif d'actionnement sensible à la température d'un organe du moteur et/ou à la durée de fonctionnement du moteur, de manière à assurer l'ouverture de la soupape de décharge lors du démarrage à froid du moteur, dispositif qui permette de réduire la perte de calories des gaz d'échappement dans le turbo-compresseur, lors du démarrage à froid du moteur, pour tous les régimes de fonctionnement du moteur.

Dans ce but, la portion de canalisation reliant le sélecteur au collecteur d'admission comporte une capacité mise en communication avec ce dernier par l'intermédiaire d'un clapet s'ouvrant quand la pression dans ce collecteur correspond à une faible charge du moteur.

Afin de bien faire comprendre l'invention, on va maintenant décrire, de manière non limitative, en se référant aux figures jointes en annexe, un mode de réalisation d'un dispositif de commande d'échappement suivant l'invention associé à un moteur suralimenté par un turbo-compresseur.

La figure 1 est une vue schématique des moyens de suralimentation du moteur et du dispositif de commande de l'échappement des gaz, lors d'un démarrage à froid du moteur.

La figure 2 est une vue schématique partielle du dispositif de commande de l'échappement des gaz, pendant le fonctionnement normal du moteur.

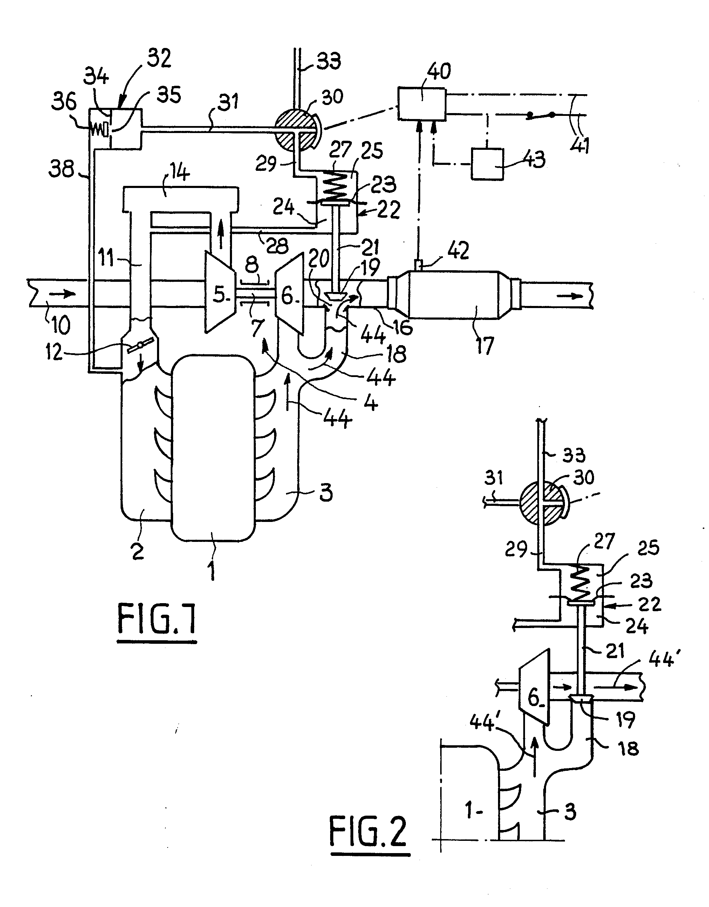

Sur la figure 1, on voit la culasse 1 du moteur à laquelle sont reliés d'un côté le collecteur d'admission 2 et de l'autre côté le collecteur d'échappement 3.

Le moteur est suralimenté par un turbo-compresseur 4 constitué par un compresseur 5 et une turbine 6 accouplés par l'intermédiaire d'un arbre 7 monté rotatif dans un palier 8. L'entrée du compresseur 5 est en communication avec une canalisation 10 d'arrivée des gaz frais dans le moteur. La sortie du compresseur 5 est en communication avec l'une des extrémités d'une tubulure d'admission 11 dont l'autre extrémité communique avec l'entrée du collecteur d'admission 2. Un papillon 12 est disposé sur le trajet des gaz, à l'entrée du collecteur d'admission 2.

Un échangeur de chaleur 14 permet de refroidir les gaz frais en circulation dans la tubulure d'admission 11.

La turbine 6 est interposée sur le trajet des gaz d'échappement à la sortie du collecteur 3. La sortie de la turbine débouche dans la ligne 16 d'échappement des gaz à l'atmosphère, cette ligne d'échappement 16 comportant un pot catalytique 17. Une conduite 18 en dérivation par rapport à la turbine 6 permet de relier directement, sans passage par la turbine 6, le collecteur 3 et la ligne d'échappement 16. La canalisation 18 débouche dans la tubulure 16 par une ouverture 20 constituant le siège d'une soupape de décharge 19. La soupape 19 comporte une tige 21 solidaire à son extrémité d'une membrane 23 séparant une capsule 22 en une première chambre 24 ou chambre haute pression et en une seconde chambre 25 ou chambre basse pression. Un ressort de rappel 27 est intercalé entre la membrane 23 et le fond de la chambre 25. Une canalisation 28 met en communication la chambre 24 avec la tubulure d'admission 11, en aval du compresseur 5 et de l'échangeur de chaleur 14. La chambre 25 est reliée par une canalisation 29, à l'une des voies d'une électrovanne 30 à trois voies. Une seconde voie de l'électrovanne est reliée par une canalisation 31 à une capacité 32. La troisième voie de l'électrovanne 30 est mise à l'atmosphère par une canalisation 33. La capacité 32 est séparée en deux parties par une paroi 34 comportant une ouverture 35 à sa partie centrale. Un clapet 36 est rappelé par son ressort en position d'obturation de l'ouverture 35. Une canalisation 38 met en communication la partie de la capacité 32 opposée à celle dans laquelle débouche la canalisation 31 avec le collecteur d'admission 2.

Un dispositif d'actionnement et de commande 40 de la vanne 30 est alimenté en courant électrique par le circuit 41 du véhicule sur lequel est monté le moteur et reçoit des signaux en provenance d'une sonde de température 42 montée sur le pot catalytique 17 et mesurant la température du catalyseur de ce pot et d'un temporisateur 43 alimenté par le circuit 41.

Lorsque le catalyseur est à une température inférieure à une valeur prédéterminée, la sonde 42 envoie un signal de commande au dispositif 40 de façon à mettre la vanne trois voies dans la position représentée sur la figure 1. Dans cette position, la chambre 25 de la capsule 22 est mise en communication par la canalisation 31 avec la capacité 32.

Dans le cas où le papillon 12 à l'entrée du collecteur 2 est peu ouvert, c'est-à-dire dans le cas où le moteur est sous faible charge, il règne une dépression dans le collecteur 2, provoquant l'ouverture du clapet 36 à l'encontre de son ressort. La chambre 25 de la capacité 22 est alors soumise à la dépression du collecteur 2. La chambre 24 est soumise, de son côté, à la pression de suralimentation régnant dans la tubulure d'admission 11. La différence de pression entre les chambres 24 et 25 provoque la déformation de la membrane 23 et du ressort 27 et le soulèvement de la tige 21 de la soupape 19. L'ouverture 20 est libérée et les gaz d'échappement circulent dans la conduite en dérivation 18, suivant le sens des flèches 44, pour atteindre le pot catalytique 17. On évite ainsi le passage des gaz d'échappement dans la turbine 6 et leur refroidissement par la turbine et son carter. On accélère ainsi la montée en température du catalyseur pendant la phase du démarrage à froid.

Lorsque le papillon 12 est ouvert de façon importante, c'est-à-dire lorsque le moteur est sous charge forte ou moyenne, la pression régnant dans le collecteur 2 est suffisante pour que le clapet 36 reprenne sa position d'obturation de l'ouverture 35. On isole ainsi la partie de la capacité 32 qui est en communication, par l'intermédiaire de la canalisation 31, avec la chambre 25. La capacité 32 reste alors sous dépression et permet, comme précédemment, l'ouverture de la soupape 19.

Dans les deux cas, la soupape de décharge 19 reste ouverte et la circulation des gaz s'effectue suivant le trajet indiqué par les flèche 44, tant que la température du catalyseur 17 reste inférieure à une valeur prédéterminée ; il est également possible de maintenir la soupape 19 ouverte pendant une durée déterminée, grâce au temporisateur 43 agissant sur le dispositif d'actionnement et de commande 40 de l'électrovanne 30.

Lorsque le catalyseur est à une température suffisante et/ou après une durée déterminée suivant le démarrage à froid du moteur, l'électrovanne à trois voies 30 est actionnée pour venir dans sa position représentée sur la figure 2. La chambre 25 de la capacité 22 est mise à l'atmosphère par l'intermédiaire de la canalisation 29, de l'électrovanne 30 et de la canalisation 33. La suralimentation peut alors être régulée de façon habituelle, la chambre 24 étant à la pression de suralimentation.

Dans le cas où la pression de suralimentation est inférieure à une valeur prédéterminée, la soupape est en position fermée et les gaz d'échappement traversent la turbine 6 suivant la direction des flèches 44'. Le turbo-compresseur est en fonctionnement et assure la suralimentation du moteur. Les gaz d'échappement sont alors suffisamment chauds pour maintenir le catalyseur de pot catalytique 17 à une température convenable, car ils sont à peine refroidis dans la turbine 6, celle-ci étant relativement chaude comme l'ensemble du moteur.

Le dispositif de commande suivant l'invention permet donc de garder une bonne efficacité du pot catalytique pendant la phase de démarrage à froid et de revenir automatiquement à un mode de fonctionnement normal du dispositif de suralimentation du moteur, à la fin de cette phase de démarrage à froid.

L'invention ne se limite pas au mode de réalisation qui a été décrit.

On peut imaginer d'autres moyens de commande d'ouverture de la soupape de décharge, lors du démarrage à froid du moteur, en remplaçant par exemple la capsule 22 à membrane par un cylindre à piston, et/ou la vanne 30 par un sélecteur ou un distributeur à tiroir. Les moyens interposés entre le dispositif de commande 40 et la soupape 19 peuvent en variante être électrohydrauliques.

Enfin, le dispositif de commande d'échappement suivant l'invention peut être utilisé sur tout moteur suralimenté par un turbo-compresseur, notamment sur un moteur du type Diesel où un filtre à particules remplace le catalyseur 17.

## Revendications

1.- Dispositif de commande de l'échappement des gaz d'un moteur suralimenté par un turbo-compresseur (4) constitué de manière connue par un compresseur (5) interposé sur le trajet des gaz frais avant leur entrée dans le collecteur d'admission (2) du moteur (1) et accouplé à une turbine (6) interposée sur le trajet des gaz à la sortie du moteur avant leur échappement à l'atmosphère, le dispositif comportant une soupape de décharge (19) qui permet par son ouverture le passage des gaz d'échappement en dérivation par rapport à la turbine (6), et qui est reliée à un organe mobile (23) séparant, dans une capsule (22), deux chambres (24, 25), une chambre (24) dite haute pression en communication avec une tubulure d'admission (11) en aval du compresseur (5) et une chambre dite basse pression (25) susceptible d'être en communication avec le collecteur d'admission (2) du moteur (1), en aval d'un papillon (12) de réglage des gaz d'admission, par une canalisation (29, 31, 38) et par l'intermédiaire d'un sélecteur (30) relié à un dispositif d'actionnement (40) sensible à la température d'un organe du moteur et/ou à la durée de fonctionnement du moteur, de manière à assurer l'ouverture de la soupape de décharge (19) lors du démarrage à froid du moteur, caractérisé en ce que la portion (31, 38) de canalisation reliant le sélecteur (30) au collecteur d'admission (2) comporte une capacité (32) mise en communication avec ce dernier par l'intermédiaire d'un clapet (36) s'ouvrant quand la pression dans ce collecteur correspond à une faible charge du moteur.

2.- Dispositif de commande suivant la revendication 1, caractérisé par le fait que le sélecteur (30) est une vanne à trois voies dont une voie est re liée à la chambre dite basse pression (25), une autre voie à la capacité (32) et la troisième voie à l'atmosphère.

3.- Dispositif de commande suivant l'une des revendications 1 et 2, caractérisé par le fait que le sélecteur (30) est commandé par un dispositif d'actionnement et de commande (40) recevant un signal d'une sonde de température (42) mesurant la température d'un catalyseur (17) situé sur le trajet des gaz d'échappement avant leur sortie à l'atmosphère, pour l'actionnement du sélecteur (30) pour mettre en communication la chambre basse pression (25) et la capacité (32) en dépression, lorsque la température du catalyseur (17) est inférieure à une température prédéterminée.

4.- Dispositif de commande suivant l'une quelconque des revendications 1 à 3, caractérisé par le fait que le sélecteur (30) est commandé par un dispositif d'actionnement et de commande (40) recevant un signal d'un temporisateur (43) de façon à maintenir le sélecteur (30) dans une position mettant en communication la chambre basse pression (25) avec la capacité (32) pendant une durée prédéterminée.

5.- Dispositif de commande suivant la revendication 1, caractérisé par le fait que la capacité (32) est séparée en deux parties par une paroi (34) comportant une ouverture (35) obturable par le clapet (36).

0266256

FIG.1

FIG.2

Office européen
des brevets

**RAPPORT DE RECHERCHE EUROPEENNE**

Numero de la demande

EP  87 40 2299

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 437 311  (IWAMOTO)<br>* Colonne 1, lignes 48-68; colonne 4, ligne 32 - colonne 7, ligne 25; figure 1 *<br>--- | 1-3 | F 02 B   37/12 |
| A | US-A-4 404 804  (TADOKORO)<br>* Colonne 2, ligne 57 - colonne 4, ligne 23; figure 2 *<br>--- | 1-3 | |
| D,A | PATENT ABSTRACTS OF JAPAN, vol. 8, no. 136 (M-304)[1573], 23 juin 1984; & JP-A-59 37 227 (HONDA GIKEN KOGYO K.K.) 29-02-1984<br>--- | 1,3 | |
| D,A | FR-A-2 483 515  (RENAULT)<br>* Page 3, ligne 23 - page 4, ligne 3; page 6, ligne 32 - page 7, ligne 10; figures 1,14 *<br>----- | 1 | |
| | | | **DOMAINES TECHNIQUES RECHERCHES (Int. Cl.4)**<br><br>F 02 B<br>F 01 N |

Le présent rapport a été établi pour toutes les revendications

| Lieu de la recherche | Date d'achèvement de la recherche | Examinateur |
|---|---|---|
| LA HAYE | 18-11-1987 | HAKHVERDI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)